# EUROPÄISCHE PATENTANMELDUNG

(11) **EP 2 952 304 A1**
(43) Veröffentlichungstag der Anmeldung: **09.12.2015**
(21) Anmeldenummer: 14170944.4
(22) Anmeldetag: 03.06.2014
(51) Int. Cl.: B25J 19/06

(54) **Verfahren und Vorrichtung zur Feststellung einer unsachgemäßen Belastung eines Elementes**

(71) Anmelder: Siemens Aktiengesellschaft, 80333 München (DE)
(72) Erfinder: Thiemann, Sebastian, 56237 Nauort (DE)

(57) **Zusammenfassung**

Die Erfindung betrifft ein Verfahren und eine Vorrichtung zur Feststellung einer unsachgemäßen Belastung eines Elements für belastete und/oder bewegliche Elemente (A1, A2, A3, A4, G1, G2, G3, G4, EE) eines Roboters oder einer Parallelkinematik (PK). Dabei werden belastete und/oder bewegliche Elemente des Roboters oder der Parallelkinematik (PK) mit elektrischen Leitern (L1, L2) ausgestattet, wobei die elektrischen Leiter (L1, L2) von einer Kotrollvorrichtung (KV) mit einer Spannung beaufschlagt sind. Vorteilhaft verlaufen die elektrischen Leiter (L1, L2) schleifenförmig entlang des zumindest einen beweglichen/belasteten Elements (A1, A2, A3, A4, G1, G2, G3, G4, EE). Bei einem Bruch eines Elements (A1, A2, A3, A4, G1, G2, G3, G4, EE) werden auch die elektrischen Leiter (L1, L2) durchtrennt/verformt und der aus der elektrischen Spannung resultierende Stromfluss ist unterbrochen oder beeinträchtigt. Die Kontrollvorrichtung (KV) registriert diese Unterbrechung/Verformung und sendet ein Signal (S), insbesondere ein Warnsignal (S), an eine zuständige Stelle.

## Beschreibung

Die Erfindung betrifft eine Vorrichtung zur Feststellung einer unsachgemäßen Belastung eines Elements. Weiter betrifft die Erfindung einen Roboter, eine Parallelkinematik sowie eine Element mit einer solchen Vorrichtung. Weiter betrifft die Erfindung ein Verfahren zur Feststellung einer unsachgemäßen Belastung eines Elements.

Eine Parallelkinematik oder ein Roboter findet heute in der Produktion von Gütern, insbesondere bei der Bestückung von Platinen mit elektronischen Bauteilen breite Anwendung.

Ein Roboter oder eine Parallelkinematik weisen regelmäßig zumindest ein Element wie einen Arm oder ein Gelenk auf, wobei zumindest ein Arm mit einem Endeffektor, beispielsweise einer Greifvorrichtung, verbunden ist.

Problematisch ist ein Bruch oder eine Verformung eines solchen Armes, insbesondere bei einer Parallelkinematik, da die Parallelkinematik in einem solchen Fall nicht mehr ordnungsgemäß funktioniert. Gemäß dem bisherigen Stand der Technik ist es schwierig, eine Verformung oder ein Bruch eines Armes bei fehlendem Sichtkontakt sicher und einfach zu erkennen.

Eine hier beschriebene Vorrichtung zur Feststellung einer unsachgemäßen Belastung wird auch als Bruchsicherung bezeichnet.

Es ist Aufgabe der Erfindung, eine Beschädigung oder eine Belastung bei einem Element ohne Sichtkontakt zu erkennen.

Die Aufgabe wird mit einer Vorrichtung zur Feststellung einer unsachgemäßen Belastung eines Elements gemäß dem Anspruch 1 gelöst.

Die Aufgabe wird weiter durch eine Parallelkinematik, einen Roboter sowie durch ein Element gelöst, die eine solche Vorrichtung aufweisen.

Die Aufgabe wird weiter durch ein Verfahren gemäß Anspruch 10 gelöst.

Die abhängigen Ansprüche beanspruchen vorteilhafte Weiterentwicklungen der Erfindung.

Unter einem Element wird hier ein Gelenk, ein Arm, ein Endeffektor oder ein anderes Bauteil, insbesondere eines Roboters oder einer Parale verstanden, welches bei Betrieb einer mechanischen Belastung ausgesetzt werden kann. Unter einem Arm eines Roboters oder einer Parallelkinematik kann jedes Bauteil sein, welches zur Positionierung des Endeffektors beiträgt. Ein Element kann auch ein Zahnrad, eine Umlenkeinrichtung oder ein anderes, mechanischer Belastung ausgesetztes Bauteil gemeint sein.

Unter einer unsachgemäßen Belastung eines Elements wird eine mechanische Belastung eines Elements eines Roboters oder einer Parallelkinematik verstanden, wobei die mechanische Belastung beispielsweise bei einer Kollision eines Elements, insbesondere des Endeffektors, mit einem anderen Element auftritt. Eine solche unsachgemäße Belastung führt oft zu einer Verformung des Elements, zu einem Bruch oder zu einer sonstigen Überlastung eines Elements.

Unter einem elektrischen Leiter versteht man beispielsweise einen dünnen Draht oder eine Folie, der beispielsweise auf dem Arm oder auf dem zu schützenden Teil befestigt wird. Eine weitere Möglichkeit besteht in der Integration des elektrischen Leiters in den Arm, das Gelenk oder den Endeffektor selbst. Als bewegliches und mit einer solchen Bruchsicherung zu versehendes Teil ist ein Arm, ein Endeffektor, ein Werkzeug, welches am Endeffektor befestigt ist, oder eine Umlenkeinheit. Beispielsweise kann der elektrische Leiter bei der Herstellung in das Element, beispielsweise dem Arm oder das Gelenk, mit eingegossen werden.

Die Kontrollvorrichtung misst vorteilhaft den Widerstand von einem oder mehreren elektrischen Leitern und gibt bei Überschreiten eines festgelegten Widerstandes ein Signal, insbesondere ein Warnsignal, aus. In einer einfachen Ausführung kann die Kontrollvorrichtung bei einer Unterbrechung des Leiters (bei einem unendlichen Widerstand) das Signal ausgeben. Vorteilhaft wird das Signal auch an eine zuständige Stelle, beispielsweise zur Beauftragung eines Wartungsprozesses geleitet.

Die elektrischen Leiter verlaufen vorteilhaft entlang (oder innerhalb) der Längsseite des beweglichen Elements, insbesondere des Arms. In einer vorteilhaften Ausgestaltung verläuft der elektrische Leiter entlang der bruchgefährdeten Seite, von etwa dem einen Ende bis etwa zum anderen Ende und U-förmig wieder zurück zum einen Ende der Seite.

Unter einer schleifenförmigen Verlegung des elektrischen Leiters versteht man den U-förmigen Verlauf entlang einer Seite des Elements des Armes, des Endeffektors oder des anderen bruchgefährdeten Elements.

Der Leiter kann auch bereichsweise quer zur Längsrichtung des Elements verlaufen. Der Leiter kann hierbei entlang der Oberfläche verlaufen und/oder im inneren des Elements, insbesondere in ein Spritzgussteil integriert, verlaufen.

Vorteilhaft kann der Leiter auch entlang mehrerer bruchgefährdeten Elementen führen, beispielsweise entlang eines ersten Armes, über ein Gelenk und danach entlang eines zweiten Armes und wieder zurück zum Ausgangspunkt zurück. In Bereichen, welche sich aufgrund der Bewegung von Elementen zueinander, nicht geeignet sind, dass der Leiter im Inneren oder an einer Außenseite einer Kupplung beider Elemente (Gelenk) verläuft, kann der elektrische Leiter bereichsweise frei in der Luft hängen oder nahe der Kupplung geführt werden.

Weiter kann der elektrische Leiter aus einem Material bestehen, der bei Zugspannung und/oder Verformung seinen elektrischen Widerstand ändert. So kann auch eine Verformung eines Armes oder eines sonstigen Elements sicher und einfach erkannt werden, obgleich der Arm oder das bewegliche Element nicht gebrochen/durchtrennt ist.

In einer vorteilhaften Ausgestaltung verläuft der Leiter in einer Schleife entlang des zumindest einen Arms.

Als Arm einer Parallelkinematik ist das Element bezeichnet, über das die Bewegung eines Motors, ggf. über ein Gelenk die Position und/oder die Ausrichtung des Endeffektors definiert. Der elektrische Leiter kann auch entlang mehrerer Arme verlaufen und dabei ggf. Gelenke überbrücken. Der Leiter kann auch zur Feststellung einer Beschädigung eines Gelenkes vorgesehen sein. Zur Feststellung der Beschädigung eines Elements verläuft der Leiter beispielsweise innerhalb des Gelenks, oder ist auf einer Außenfläche des Gelenkes befestigt.

In einer weiteren vorteilhaften Ausgestaltung sind die Arme über Gelenke verbunden, wobei jeweils ein elektrischer Leiter zumindest einem Arm zugeordnet ist.

Besonders gefährdete Elemente wie Arme oder Gelenke können mit einem Leiter oder mit mehreren Leitern ausgestattet sein.

In einer weiteren vorteilhaften Ausgestaltung sind zumindest einem elektrischen Leiter Arme zugeordnet, die über Gelenke miteinander verbunden sind.

In dieser vereinfachten Ausgestaltung durchläuft ein Leiter mehrere Arme in einem U-förmigen Verlauf. So kann vorteilhaft die Kontrollvorrichtung vereinfacht sein.

In einer weiteren vorteilhaften Ausgestaltung verläuft der elektrische Leiter zumindest bereichsweise entlang einer Oberfläche des zumindest einen Armes.

Für eine solche Ausgestaltung eignet sich insbesondere eine Metallfolie, die an einer Seite auf den Arm oder auf das weitere Element befestigt, insbesondere aufgeklebt, wird. Durch eine solche Ausgestaltung kann vorteilhaft auch eine bestehende Parallelkinematik mit einer hier beschriebenen Bruchsicherung nachgerüstet werden.

In einer weiteren vorteilhaften Ausgestaltung verläuft der elektrische Leiter zumindest bereichsweise im Inneren des zumindest einen Elements.

Vorteilhaft kann der elektrische Leiter, insbesondere ein dünner Draht oder mehrere dünne Drähte oder eine Metallfolie, in das Material des Elements selbst integriert werden. So kann die Vorrichtung zur Feststellung der unsachgemäßen Belastung besonders widerstandsfähig gegenüber äußeren Einflüssen gestaltet werden. Zudem ist ein spannungsführender Leiter an der Außenseite eines Elements vorteilhaft nicht vorhanden. Die Integration des Leiters in das Element erfolgt beispielsweise dadurch, dass der Leiter beim (Spritz-) Gießen des Elements mit eingegossen wird und zudem Enden des Leiter an den Seiten herausragen.

Durch die Beaufschlagung eines Elements mit mehreren, beabstandeten Leitern bzw. Leiterschleifen und einer dafür ausgestatteter Kontrollvorrichtung ist eine genauere Lokalisierung der Belastung der Richtung möglich, falls z.B. eine Leiterschleife in einem Element durchrennt ist und eine andere nicht.

Die Erfindung ist auch zur Feststellung von einer unsachgemäßen Belastung eines Elements bei einem Kran, bei einer Hebevorrichtung, einer Produktionsmaschine, einer Werkzeugmaschine einsetzbar.

Die vorliegende Erfindung wird nachfolgend an einem Ausführungsbeispiel anhand Zeichnungen näher erläutert.

Es zeigen
- FIG 1: eine schematische Darstellung einer hier beschriebenen Vorrichtung an einer Parallelkinematik, sowie
- FIG 2: einen Ausschnitt einer Parallelkinematik.

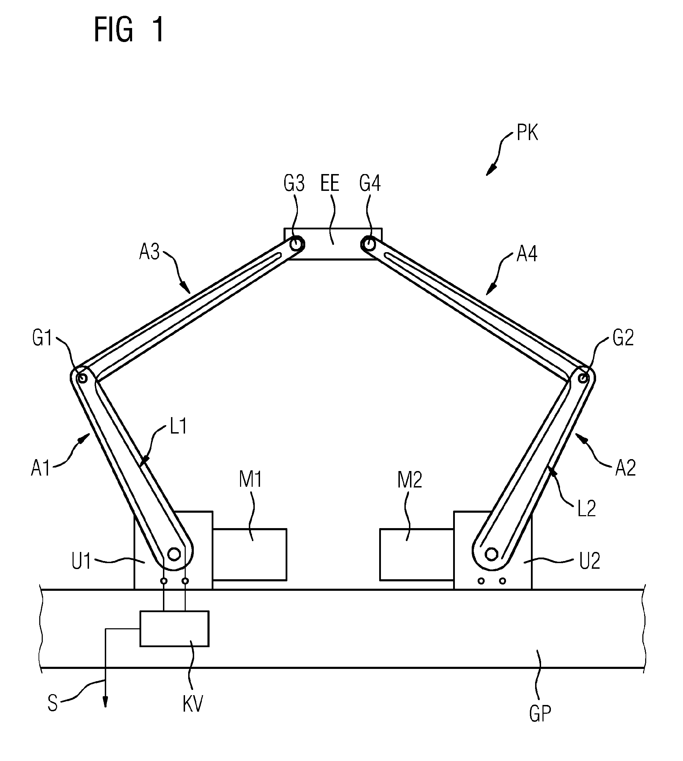

FIG 1 zeigt eine schematische Darstellung einer hier beschriebenen Vorrichtung an einer Parallelkinematik PK. Eine hier beschriebene Vorrichtung wird im Folgenden als Bruchsicherung bezeichnet. Auf einer Grundplatte GP sind zwei Umlenkeinrichtungen U1, U2 angeordnet. Die Umlenkeinrichtungen U1, U2 dienen zur Veränderung der Ausrichtung von einem Arm A1, A2, die mit jeweils einem ersten Arm der Umlenkeinrichtungen U1, U2 verbunden sind. Zur Änderung der Ausrichtung der Arme A1, A2 sind Motoren M1, M2 vorgesehen, wobei die Bewegung der Rotoren der Motoren M1, M2 zur Änderung der Ausrichtung der ersten Arme A1, A3, und über zweite Arme A2, A4 einer Änderung einer Position und/oder Ausrichtung des Endeffektors EE vorgesehen sind. An den (ersten) Armen A1, A2, die den Umlenkeinrichtungen U1, U2 zugeordnet sind, sind an deren anderen Enden zweite Arme A3, A4 über Gelenke G1, G2 befestigt. Die zweiten Arme A3, A4 sind auf der einen Seite mit den Gelenken G1, G2 befestigt und auf der anderen Seite über Gelenke G3, G4 mit dem Endeffektor verbunden.

In der gezeigten Ausführung der Parallelkinematik PK ist der Umlenkeinrichtung U1 der ersten Arm A1 zugeordnet. Dem zweiten Arm A3 ist über das Gelenk G1 der ersten Arm A1 zugeordnet. Dem zweiten Arm A3 ist über das Gelenk G3 dem Endeffektor EE zugeordnet.

In der gezeigten Ausführung der Parallelkinematik ist der Umlenkeinrichtung U2 der erste Arm A2 zugeordnet. Dem zweiten Arm A4 ist über das Gelenk G2 der ersten Arm A2 zugeordnet. Dem zweiten Arm A4 ist auch über das Gelenk G4 ebenfalls der Endeffektor EE zugeordnet.

Der erste elektrische Leiter L1 verläuft in dieser Ausführung in einer Schleife entlang des ersten Armes A1, über das Gelenk G1 und entlang des zweiten Armes A3 bis fast zum Endeffektor und zurück entlang der beiden Arme A1, A1. Bei einem Bruch eines Armes A1, A3 ist der elektrische Leiter unterbrochen. Dieses Unterbrechen wird von einer Kontrollvorrichtung KV registriert. Bei einem Bruch eines Armes A1, A2, A3, A4 oder einer starken Verformung des Armes A1, A2, A3, A4 sowie ggf. eines der Gelenke G1, G2, G3, G4 wird der elektrische Leiter durchtrennt. Somit ist der Stromfluss durch den elektrischen Leiter L1, L2 unterbrochen. Diese Unterbrechung wird durch die Kontrollvorrichtung KV registriert. Bei einer Unterbrechung des Stromflusses gibt die Kontrollvorrichtung KV ein Signal S an eine zuständige Stelle aus.

Es können auch mehrere Leiter L1, L2 jeweils einem Arm und/ oder einem Gelenk zugeordnet sein. Somit wird vorteilhaft die Empfindlichkeit der Vorrichtung zur Feststellung einer unsachgemäßen Belastung eines Elements A1, A2, A3, A4, G1, G2, G3, G4, EE, U1, U2 (Bruchsicherung) der Parallelkinematik PK erhöht und/oder die Störungsanfälligkeit der Vorrichtung zur Feststellung einer unsachgemäßen Belastung des Elements A1, A2, A3, A4, G1, G2, G3, G4, EE, U1, U2 verringert.

Analog registriert die Kontrollvorrichtung KV auch den Bruch einer der Arme A2, A4.

Bei der Feststellung einer unsachgemäßen Belastung eines Elements A1, A2, A3, A4, G1, G2, G3, G4, EE, U1, U2, insbesondere bei Bruch eines Elements, sendet die Kontrollvorrichtung ein Signal an eine zuständige Stelle, gibt ein Warnsignal aus und/oder sorgt für eine Unterbrechung der Funktion der Parallelkinematik PK.

Vorteilhaft verlaufen die Leiter an einer Außenseite von zumindest einem Arm A1, A2, A3, A4 oder im Inneren des jeweiligen Armes A1, A2, A3, A4. Da eine Beschädigung auch bei den Gelenken auftreten kann, ist es vorteilhaft, die elektrischen Leiter L1, L2 auch innerhalb bzw. an der Außenseite der Gelenke selbst verlaufen zu lassen.

Für eine genauere Analyse von Schäden an der Parallelkinematik PK ist es auch möglich, einen Leiter L1, L2 auszuwählen, der bei einer mechanischen Spannung einen erhöhten elektrischen Widerstand aufweist. Der erhöhte Widerstand kann bei einer Dehnung eines Armes A1, A2, A3, A4, des Endeffektors EE oder eines Gelenkes G1, G2, G3, G4, von der Kontrollvorrichtung KV registriert werden. Bei einer Erhöhung des Widerstandes eines zugspannungs-empfindlichen elektrischen Leiters kann so auf eine unvorhergesehene Verformung des elektrischen Leiters L1, L2 und somit auf eine unsachgemäße Belastung des Elements A1, A2, A3, A4, G1, G2, G3, G4, EE, U1, U2 geschlossen werden.

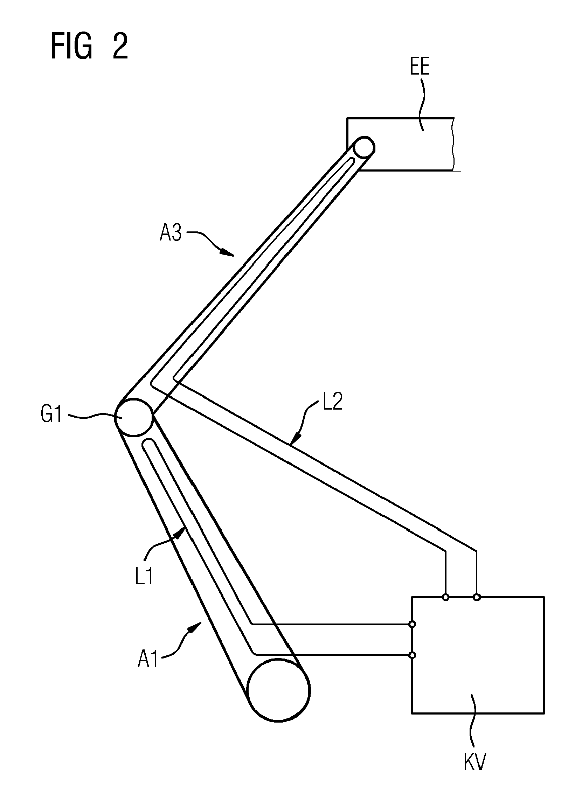

FIG 2 zeigt einen Ausschnitt einer Parallelkinematik PK. Gezeigt ist ein erster Arm A1, der über ein Gelenk G1 mit einem zweiten Arm A3 verbunden ist. In dieser Ausführungsform weist die Parallelkinematik PK zwei Leiter auf, wobei ein erster Leiter L1 dem ersten Arm A1 zugeordnet ist und wobei ein zweiter elektrischer Leiter L2 einem zweiten Arm A3 zugeordnet ist.

Beide elektrischen Leiter L1, L2 sind mit der Kontrollvorrichtung KV verbunden. In der in FIG 2 gezeigten Ausführung der Bruchsicherung kann die Kontrollvorrichtung KV gezielt eine Beschädigung einem ersten Arm 1 und/oder einem zweiten Arm A2 zuordnen.

So ist eine verbesserte Analyse möglich, welcher Arm A1, A2, A3, A4 der Parallelkinematik gebrochen oder beschädigt ist. Vorteilhaft kann eine solche Bruchsicherung an einem bestehenden Roboter oder an einer bestehenden Parallelkinematik PK nachgerüstet werden, insbesondere falls der zumindest eine Leiter L1, L2, beispielsweise in Form einer Folie, auf die Oberflächen der Arme A1, A2, A3, A4, der Gelenke G1, G2, G3, G4 und/oder des Endeffektor EE befestigt wird.

Die elektrischen Leiter L1, L2 können auch zur Spannungsversorgung des Endeffektors EE, beispielsweise einer Greifvorrichtung, dienen. Dann sind die elektrischen Leiter L1, L2 nicht in Form einer Schleife zu verwenden, sondern von einer Spannungsversorgung bis zum Endeffektor durchgehend parallel verlaufen. Eine dafür geeignete Schaltung, insbesondere eine Kontrollvorrichtung am Endeffektor EE, gibt bei einer Unterbrechung der Spannungsversorgung des Endeffektors EE ein Signal S, insbesondere ein Warnsignal, aus.

Die Bruchsicherung ist auch für jeden Roboter einsetzbar, wobei die Leiter L1, L2 zumindest einem Arm A1, A2, A3, A4 zugeordnet sind.

Ungeachtet der Darstellung einer Parallelkinematik mit zwei Armen ist eine solche Bruchsicherung auch für andere Konstruktionen wie Hexapoden anwendbar.

Weiter kann eine solche Vorrichtung zur Feststellung einer unsachgemäßen Belastung eines Elements (Bruchsicherungen) mit weiteren derartigen Vorrichtungen (Bruchsicherungen anderer Funktionsweise) kombiniert werden. Zum Beispiel eine Bruchsicherung, bei der ein Motorstromverlauf analysiert wird und ein Abweichen eines ermittelten Ist-Motorstroms mit einem berechneten Soll-Motorstrom verglichen wird und bei einer Abweichung der beiden Werte ein Signal S ausgibt.

Eine hier beschriebene Vorrichtung zur Feststellung einer unsachgemäßen Belastung eines Elements ist natürlich für alle bruchgefährdeten/belastungsintensiven Elemente einer Parallelkinematik oder eines Roboters geeignet. Beispiele für bruchgefährdete Elemente eines Roboters oder Parallelkinematik PK ist der Endeffektor EE, ein Werkzeug und/oder ein anderes bewegliches oder belastetes Teil.

Zusammenfassend betrifft die Erfindung eine Vorrichtung zur Feststellung einer unsachgemäßen Belastung eines Elements für belastete und/oder bewegliche Elemente A1, A2, A3, A4, G1, G2, G3, G4, EE eines Roboters oder einer Parallelkinematik PK. Dabei werden belastete und/oder bewegliche Elemente des Roboters oder der Parallelkinematik PK mit elektrischen Leitern L1, L2 ausgestattet, wobei die elektrischen Leiter L1, L2 von einer Kotrollvorrichtung KV mit einer Spannung beaufschlagt sind. Vorteilhaft verlaufen die elektrischen Leiter L1, L2 schleifenförmig entlang des zumindest einen beweglichen/belasteten Elements A1, A2, A3, A4, G1, G2, G3, G4, EE. Bei einem Bruch eines Elements A1, A2, A3, A4, G1, G2, G3, G4, EE werden auch die elektrischen Leiter L1, L2 durchtrennt/verformt und der aus der elektrischen Spannung resultierende Stromfluss ist unterbrochen oder behindert. Die Kontrollvorrichtung KV registriert diese Unterbrechung/Verformung und sendet ein Signal S, insbesondere ein Warnsignal S, an eine zuständige Stelle.

## Patentansprüche

1. Vorrichtung zur Feststellung einer unsachgemäßen Belastung eines Elements, insbesondere für einen Roboter oder eine Parallelkinematik, wobei die Vorrichtung zumindest einen elektrischen Leiter (L1, L2) und eine Kontrollvorrichtung (KV) aufweist, wobei der zumindest eine elektrische Leiter entlang eines Armes (A1, A2, A3, A4), eines Endeffektors (EE) und/oder eines Gelenkes (G1, G2, G3, G4) verläuft, wobei die Enden des zumindest einen Leiters (L1, L2) mit der Kontrollvorrichtung (KV) verbunden sind, wobei der zumindest eine Leiter (L1, L2) derart angeordnet ist, dass bei einem Bruch und/oder einer Verformung des zumindest einen Armes (A1, A2, A3, A4), des einen Gelenks (G1, G2, G3, G4) und/oder des Endeffektors (EE) eine Unterbrechung und/oder eine Widerstandsänderung des elektrischen Leiters (L1, L2) erfolgt und wobei die Kontrollvorrichtung (KV) zur Ausgabe eines Signals (S) bei Unterbrechung und/oder Widerstandsänderung des zumindest einen Leiters (L1, L2) ein Signal (S) vorgesehen ist.

2. Vorrichtung nach Anspruch 1, wobei der Leiter (L1, L2) in einer Schleife entlang des zumindest einen Arms (A1, A2, A3, A4) verläuft.

3. Vorrichtung nach Anspruch 1 oder 2, wobei die Arme (A1, A2, A3, A4) über Gelenke (G1, G2, G3, G4) verbunden sind, wobei jeweils ein elektrischer Leiter (L1, L2) zumindest einem Arm (A1, A2, A3, A4) zugeordnet ist.

4. Vorrichtung gemäß einem der vorangehenden Ansprüche, wobei ein elektrischer Leiter (L1, L2) Armen (a1, A2, A3, A4) zugeordnet ist, die über Gelenke (G1, G2, G3, G4) miteinander verbunden sind.

5. Vorrichtung nach einem der vorangehenden Ansprüche, wobei der elektrische Leiter (L1, L2) zumindest bereichsweise entlang einer Oberfläche zumindest eines Armes (A1, A2, A3, A4) verläuft.

6. Vorrichtung nach einem der vorangehenden Ansprüche, wobei der elektrische Leiter (L1, L2) zumindest bereichsweise im Inneren der Arme (A1, A2, A3, A4) verläuft.

7. Element, insbesondere ein Arm (A1, A2, A3, A4), ein Gelenk (G1, G2, G3, G4), aufweisend eine Vorrichtung gemäß einem der vorangehenden Ansprüche.

8. Parallelkinematik, aufweisend eine Vorrichtung gemäß einem der Ansprüche 1 bis 6.

9. Roboter, aufweisend eine Vorrichtung gemäß einem der Ansprüche 1 bis 6.

10. Verfahren zur Feststellung einer unsachgemäßen Belastung eines Elements, insbesondere bei einem Roboter oder einer Parallelkinematik (PK), wobei Arme (A1, A2, A3, A4) mit zumindest einem elektrischen Leiter (L1, L2) beaufschlagt werden, wobei die elektrischen Leiter (L1, L2) mittels einer Kontrollvorrichtung (KV) mit einer elektrischen Spannung beaufschlagt werden, wobei bei einem Bruch und/oder einer Verformung zumindest einer der Arme (A1, A2, A3, A4) der aus der elektrischen Spannung resultierende Stromfluss unterbrochen oder beeinträchtigt wird, und wobei die Unterbrechung oder Beeinträchtigung des Stromflusses zu einem Signal (S), insbesondere einem Warnsignal, führt.
